# EUROPEAN PATENT APPLICATION

(11) **EP 3 091 742 A1**
(43) Date of publication of application: **09.11.2016**
(21) Application number: 15305686.6
(22) Date of filing: 05.05.2015
(51) Int. Cl.: H04N 19/597, G06T 3/00, H04N 19/46, H04N 19/63, H04N 19/167, H04N 19/59

(54) **DEVICE AND METHOD FOR ENCODING A FIRST IMAGE OF A SCENE USING A SECOND IMAGE HAVING A LOWER RESOLUTION AND CAPTURED AT THE SAME INSTANT**

(71) Applicant: Thomson Licensing, 92130 Issy-les-Moulineaux (FR)
(72) Inventor: Boisson, Guillaume, 35576 CESSON-SÉVIGNÉ (FR); Blondé, Laurent, 35576 CESSON-SÉVIGNÉ (FR); Drazic, Valter, 35576 CESSON-SÉVIGNÉ (FR)
(74) Representative: Browaeys, Jean-Philippe

(57) **Abstract**

Method of encoding comprising:
- encoding a lower resolution version of said first image computed from said second image; and
- encoding - preferably wavelet based - a difference between said first image and said lower resolution version.

Device configured to implement said method. Composite image capture and encoding system including said device.

## Description

### Technical Field

The invention concerns the encoding of composite images, wherein each composite image comprises notably an image viewing a scene under a wide angle of field of view and a low spatial resolution and another image viewing a portion of the same scene under a low angle of field of view and a higher spatial resolution. This other image may be formed of a mosaic of high resolution views that are not necessarily spatially connected together, all these high resolution views being captured approximately at the same time. The composite image may still comprise other views of the same scene, for instance under other angles of field of view.

### Background Art

Such composite images can be obtained for instance by a saccadic-vision camera able to perform so-called foveated imaging of a scene. See for instance thesis entitled "Design of Saccadic Active Vision System", presented by Winnie Wong in 2006 at the University of Waterloo, Ontario, Canada. Such a system is able to examine and capture scenes through foveated imaging, where scrutiny is notably reserved for salient regions of interest, and comprises generally an image sensor configured to be used in dual modes of resolution:
- a first mode able to capture images under a wide angle of field but low resolution;
- a second mode able to capture images under a narrow angle of field but high resolution, therefore acting as a system's fovea.

For the foveation of images captured with such a system, the camera generally needs to know what is the gaze direction and generally uses a dedicated lens and associated image processing to rebalance resolution in the field of view, privileging the fovea region.

Such composite images can also be obtained by a system based on a network of cameras positioned to capture a scene and different parts of this scene, some of them being set to get high resolution views of different parts of this scene that can be fused into a first image of high resolution, and other of them being set to get low resolution views of this scene that can also be fused into a second image of lower resolution. See notably distributed camera systems that provide multi-resolution surveillance of a scene.

Such composite images can also be obtained by a multichannel imaging system where the different optical channels have a different angular resolution and field-of-view, which is notably configured to resolve fine details in a small region of interest of a scene through the channel that has the highest angular resolution while controlling the surrounding region of this scene through the channel that has the widest field-of-view.

The encoding of an image comprises generally the encoding of a spatial-filtered version of this image and the encoding of a difference between this image and its spatial-filtered version. The invention takes advantage of different spatial resolutions of images imaging a scene to encode under such a general scheme an image of this scene.

### Summary of invention

An object of the invention is then to deliver a complete but compact video stream from the acquisition of images presenting different angles of field of view of a scene and different spatial resolution to encode a high resolution version of such images.

For this purpose, a subject of the invention is a method of encoding a first image of a scene using a second image of said scene having a lower resolution compared to said first image, wherein said first image and said second image image said scene at the same instant, said method comprising:
- encoding a lower resolution version of said first image computed from said second image; and
- encoding a difference between said first image and said lower resolution version.

The second image generally views the scene under a wide angle of field of view, as the first image generally views a portion of the scene under a lower angle of field of view, wherein the lower angle of field of view in included in the wide angle of field of view. This first image may be formed of a mosaic of views that are not necessarily connected. The second image may be time-interpolated from image(s) having said lower resolution imaging the scene at instant(s) different from the instant of imaging of the first image.

Preferably, said computing of said lower resolution version of first image comprises cropping said second image into a portion of said second image defined as imaging the same part of said scene as said first image. Preferably, said cropping is performed using cropping metadata.

Preferably, said computing of said lower resolution version of first image comprises remapping said portion such as to compensate for geometric distortions with said first image. Preferably, said remapping comprises a warping of said portion. Preferably, said remapping is performed using remapping metadata.

Preferably, encoding of said difference is wavelet based.

A subject of the invention is also an encoding device for encoding a first image of a scene using a second image of said scene having a lower resolution compared to said first image and imaging said scene at the same instant as said first image, configured for:
- encoding a lower resolution version of said first image computed from said second image; and
- encoding a difference between said first image and said lower resolution version.

Preferably, this encoding device comprises a module configured for computing said lower resolution version of first image by cropping said second image into a portion of said second image defined as imaging the same part of said scene as said first image.

Preferably, said module is also configured for computing said lower resolution version of first image by remapping said portion such as to compensate for geometric distortions with said first image.

A subject of the invention is also a composite image capture and encoding system comprising a composite image capture device and the encoding device according to the invention,
wherein said composite image capture device is configured to capture
simultaneously a first image of a scene and a second image of said scene having a lower resolution compared to said first image and to provide delimitation metadata related to the position of the field of view of said first image in the field of view of said second image,
wherein said encoding device is also configured to receive said first and second image and said delimitation metadata from said composite image capture device.

Preferably, said encoding device is also configured to receive distortion metadata from said composite image capture device.

A subject of the invention is also a computer-readable program comprising computer-executable instructions to enable a computer to perform the method of the invention.

### Brief description of drawings

The invention will be more clearly understood on reading the description which follows, given by way of non-limiting example and with reference to the appended figures in which:
- Figure 1 illustrates an embodiment of a system adapted to implement the embodiment of the method illustrated on figure 3;
- Figure 2 illustrates a composite image and related metadata provided by the composite image capture device included in the system of figure 1;
- Figure 3 illustrates an embodiment of the method according to the invention.

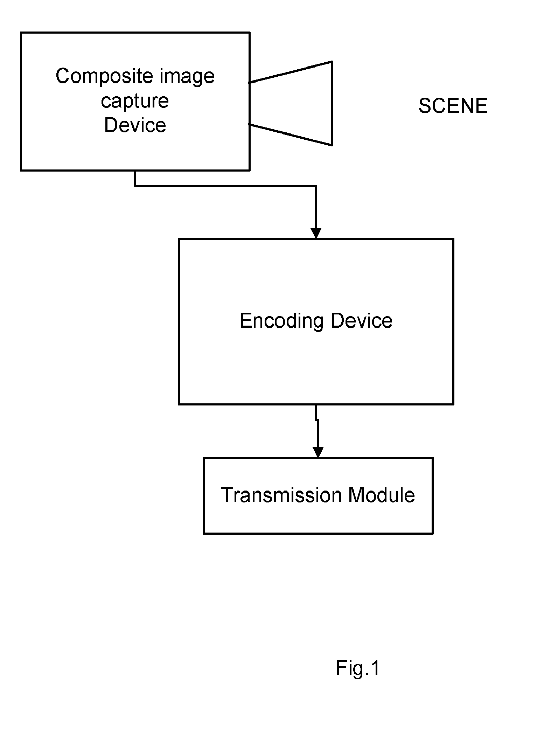

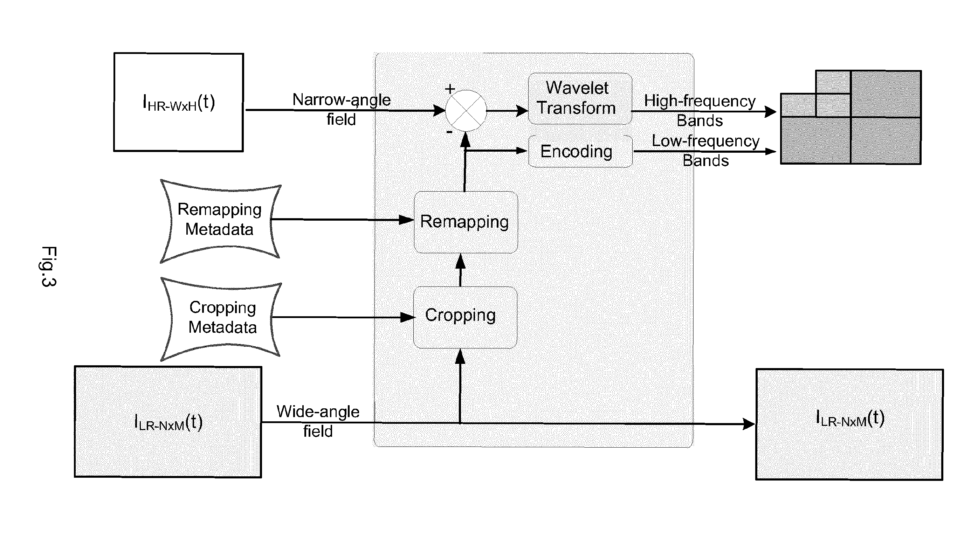

The functions of the various elements shown in figure 3 may be provided through the use of dedicated hardware included in the encoding device of the system of figure 1, as well as hardware capable of executing software in association with appropriate software.

### Description of embodiments

### Description of the system

As a non-limiting example illustrated on figure 1, the composite image capture and encoding system used to implement the method according to the below embodiment of the invention comprises a composite image capture device, an encoding device and a transmission module.

The composite image capture device can be for instance a saccadic-vision camera, or comprises different cameras distributed in a network, or is a multichannel imaging system, or can be any other equivalent composite image capture device configured to deliver simultaneously a first sequence of images I_{HR-WxH} of a scene under a low angle of field of view and a high spatial resolution and a second sequence of images I_{LR-NxM} of the same scene under a wider angle of field of view and a lower spatial resolution. When images of the first sequence are made of a mosaic of sub-views viewing different parts of the scene under different low sub-angles of field of view, the low angle of field of view of these images is a combination of these different sub-angles. In a variant, the composite image capture device is configured to provide 3D images, i.e. images of the scene under different angle of views.

The encoding device may be implemented in various forms of hardware, software, firmware, special purpose processors, or combinations thereof. Moreover, the software may be implemented as an application program tangibly embodied on a program storage unit. The application program may be uploaded to, and executed by, the encoding device comprising any suitable architecture. Preferably, the encoding device is implemented on a computer platform having hardware such as one or more central processing units ("CPU"), a random access memory ("RAM"), and input/output ("I/O") interfaces that are notably connected, for instance through a BUS, to the composite image capture device and to the transmission module. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit. The encoding device may be directly attached to the composite image capture device.

In a variant, when the composite image capture device is configured to provide 3D images, the encoding device can be configured to compute disparity maps between images of the scene captured under different angles of view. Such a computation of disparity is known per se and will not be described in detail.

The transmission module is configured to transmit to any receiver each image of the first sequence as encoded by the encoding device as described below. The receiver can be notably configured to decode received images that are encoded by the encoding device.

### Description of the method

Using the composite image capture device adequately configured, a first sequence of images I_{HR-WxH} of a scene is provided under a narrow angle of field of view and high spatial resolution and a second sequence of images I_{LR-NxM} of a scene is provided under a wider angle of field of view and a lower spatial resolution such that the narrow angle of field of view is included in the wide angle of field of view, and such that the resolution of images of the second sequence is inferior to the resolution of images of the first sequence, more precisely such that the number of pixels of an image of the first sequence is superior to the number of pixels in a portion of the corresponding image of the second sequence, wherein such a portion is obtained by cropping as detailed below. The word "corresponding" means that corresponding images image the scene approximately at the same instant. The resolution of images of the first sequence corresponds preferably between 2 to 16 times the resolution of images of the second sequence. For instance, high resolution images of the first sequence are in the 4K format, i.e. 4096x2160, and low resolution images of the second sequence are in the XGA format, i.e. 1024x768.

As the narrow angle of field of view of the camera(s) may vary, the resolution of images of the first sequence may vary accordingly along this sequence.

As already explained, images of the first sequence may be formed of a mosaic of sub-views viewing different parts of the scene under high resolution, those sub-views being not connected, connected or even having some overlap. Each sub-view corresponds to a focus of a specific part of the scene and is for instance provided by a different camera of the network.

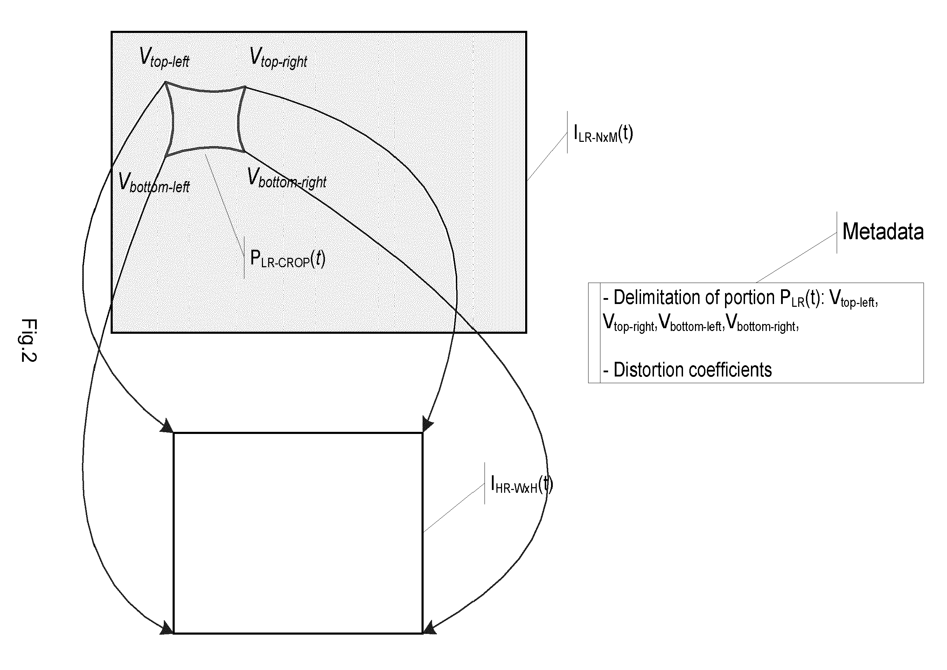

High resolution Images of the first sequence overlap lower resolution images of the second sequence such that there is a cropped portion of each low resolution image of the second sequence that images the same part of the scene as a corresponding high resolution image of the first sequence. Figure 2 illustrates, as an example, how a first image I_{HR-WxH}(t) of the first sequence having WxH pixels overlaps a corresponding portion P_{LR-CROP}(t) of a second image I_{LR-NxM}(t) of the second sequence, this second image having NxM pixels. As shown on figure 2, such a portion P_{LR-CROP}(t) of the second image I_{LR-NxM}(t) is delimited in this image by a cushion-shaped contour anchored on four vertex pixels *V_{top-left}, V_{top-right}, V_{bottom-left,} V_{bottom-right}* of this second image. The positions of these vertex pixels in the second image can be determined in a manner known per se, for instance using feature correspondence algorithms between the first and second image, or can **preferably** be provided by **delimitation metadata** related to the position of the field of view of the first image in the field of view of the second image. Such delimitation metadata may be computed in a manner known per se for instance from data concerning these field of views provided by the composite image capture device. These delimitation metadata are for instance provided to the encoding device by the composite image capture device. The cushion-shaped contour of this overlapped portion illustrates a geometric distortion between first and second images of the sequences, which may be notably due to difference in optical performance between the two capture modes of the saccadic-vision camera, or to optical difference between the lenses of the different cameras of the network. Such a geometric distortion can be characterized by distortion coefficients which form the basis of **distortion metadata,** such distortion metadata being preferably provided to the encoding device by the composite image capture device.

The first I_{HR-wXH}(t) and the second I_{LR-NxM}(t) images are captured at the same instant t. When no lower resolution image of the second sequence is available that images the scene at the same instant t as the image of the first sequence, such a lower resolution image is temporally interpolated at the same instant t in a manner known per se from image(s) of the second sequence that are temporally closed to instant t. Such an interpolation may use for instance well known movement compensation techniques.

Such first and second sequences of images of a scene are captured in a manner known per se by the composite image capture device and transferred to the encoding device, with delimitation metadata and distortion metadata. Then, the encoding device performs the four following steps of the encoding method according to an embodiment of the invention which is illustrated on figure 3.

In a **first step,** for each first image I_{HR-wxH}(t) of the first sequence imaging a part of the scene at the instant t, the corresponding second image I_{LR-NxM}(t) of the second sequence is **cropped** into a portion P_{LR-CROP}(t) defined as imaging the same part of the scene at the same instant t. Such a cropping step is performed in a manner known per se using **delimitation metadata** provided by the image capture device. These delimitation metadata correspond to spatial reference for cropping, including notably the position, as defined above, of the vertex pixels *V_{top-left}, V_{top-right}, V_{bottom-left}, V_{bottom-right}* of the second image, and, possibly, any data related to the cushion-shape of the contour of overlapped pixels.

In a **second step,** the portion P_{LR-CROP}(t) of this second image I_{LR-COMP}(t) is **remapped** using **distortion metadata** provided by the image capture device as defined above, in order to compensate for geometric distortions between the first image and the second image. After such a compensation, a good spatial matching is obtained between pixels of the remapped portion and pixels of the first image, where each pixel of the remapped portion correspond to a plurality of pixels of the first image. This remapping step may also additionally include a warping sub-step that implements e.g. binilear or bicubic interpolation, or Lanczos filtering.

The remapped portion of the second image that is obtained through the first and second steps provides in fact a new version of the first image with a spatial resolution which is lower than the resolution of the first image I_{HR-WxH}(t) itself.

In a **third step** of the method according to this embodiment of the invention, the lower resolution version of the first image is encoded on an intra or an inter basis, resulting in low spatial frequency encoded bands.

In a **fourth step,** the difference between the first image and its lower resolution version is encoded using a **wavelet transform,** as shown on figure 3, resulting in high spatial frequency encoded bands.

Low spatial frequency encoded bands and high spatial frequency encoded bands are the final results of the method of encoding the first image of the first sequence according to this embodiment of the invention. Other images of the first sequence are encoded similarly using images of the second sequence, in order to get a whole sequence of encoded images.

Low spatial frequency encoded bands and high spatial frequency encoded bands of each image of the first sequence are transferred to the transmission module for transmission to any receiver.

At the receiver side, low spatial frequency encoded bands and high spatial frequency encoded bands are decoded in a manner known per se in order to get decoded images of the first sequence.

An improvement of the invention addresses camera motion and/or moving objects. It requires the knowledge of the optical flow at the receiver and decoder side. Such an optical flow correspond to the apparent movements of objects of the scene in successive images of the decoded sequence. This optical flow may either be estimated at decoder side, or estimated at encoder side and transmitted by the transmission module to the receiver as additional **optical flow metadata.** Moreover, if cameras capturing the first sequence span the scene such that images of the captured sequence correspond to different parts of this scene, high spatial frequency bands of encoded transmitted images of some parts are kept in memory at the receiver side. Then, when an image of the first sequence capturing a given part of the scene at an instant t is received by the receiver, high spatial frequency bands of previous images that are kept in memory can be used to enlarge this given part in order to provide high-resolution details on a part of the scene which is larger that said given part.

Although the illustrative embodiments of the invention have been described herein with reference to the accompanying drawings, it is to be understood that the present invention is not limited to those precise embodiments, and that various changes and modifications may be effected therein by one of ordinary skill in the pertinent art without departing from the invention. All such changes and modifications are intended to be included within the scope of the present invention as set forth in the appended claims.

While the present invention is described with respect to a preferred embodiment, it is understood that the present invention is not limited to this embodiment. The present invention as claimed therefore includes variations from this preferred embodiment described herein, as will be apparent to one of skill in the art. Reference numerals appearing in the claims are by way of illustration only and shall have no limiting effect on the scope of the claims.

## Claims

1. Method of encoding a first image (I_{HR-WxH}(t)) of a scene using a second image (I_{LR-NxM}(t)) of said scene having a lower resolution compared to said first image, wherein said first image and said second image image said scene at the same instant (t), said method comprising:
- encoding a lower resolution version of said first image computed from said second image; and
- encoding a difference between said first image (I_{HR-WxH}(t)) and said lower resolution version.

2. Method of encoding according to claim 1, wherein computing of said lower resolution version of first image comprises cropping said second image (I_{LR-NxM}(t)) into a portion (P_{LR-CROP}(t)) of said second image (I_{LR-NxM}(t)) defined as imaging the same part of said scene as said first image (I_{HR-wxH}(t)).

3. Method of encoding according to claim 2 wherein said cropping is performed using cropping metadata.

4. Method of encoding according to claim 2 or 3, wherein said computing of said lower resolution version of first image (I_{HR-WxH}(t)) comprises remapping said portion (P_{LR-CROP}(t)) such as to compensate for geometric distortions with said first image (I_{HR-wxH}(t)).

5. Method of encoding according to claim 4, wherein said remapping comprise a warping of said portion (P_{LR-CROP}(t)).

6. Method of encoding according to claim 4 or 5 wherein said remapping is performed using remapping metadata.

7. Method of encoding according to any one of claims 1 to 6 wherein encoding of said difference is wavelet based.

8. Encoding device for encoding a first image (I_{HR-WxH}(t)) of a scene using a second image (Lp_{-NxM}(t)) of said scene having a lower resolution compared to said first image and imaging said scene at the same instant (t) as said first image, configured for:
- encoding a lower resolution version of said first image computed from said second image; and
- encoding a difference between said first image (I_{HR-WxH}(t)) and said lower resolution version.

9. Encoding device according to claim 8 comprising a module configured for computing said lower resolution version of first image by cropping said second image (I_{LR-NxM}(t)) into a portion (P_{LR-CROP}(t)) of said second image (I_{LR-NxM}(t)) defined as imaging the same part of said scene as said first image (I_{HR-WxH}(t)).

10. Encoding device according to claim 9 wherein said module is also configured for computing said lower resolution version of first image by remapping said portion (P_{LR-CROP}(t)) such as to compensate for geometric distortions with said first image (I_{HR-wxH}(t)).

11. Composite image capture and encoding system comprising a composite image capture device and an encoding device according to claim 10 or 11,
wherein said composite image capture device is configured to capture simultaneously a first image (I_{HR-WxH}(t)) of a scene and a second image (I_{LR-NxM}(t)) of said scene having a lower resolution compared to said first image and to provide delimitation metadata related to the position of the field of view of said first image in the field of view of said second image,
wherein said encoding device is also configured to receive said first (I_{HR-WxH}(t)) and second image (I_{LR-NxM}(t)) and said delimitation metadata from said composite image capture device.

12. Composite image capture and encoding system comprising an encoding device according to claim 10,
wherein said composite image capture device is configured to capture simultaneously a first image (I_{HR-WxH}(t)) of a scene and a second image (I_{LR-NxM}(t)) of said scene having a lower resolution compared to said first image and to provide delimitation metadata related to the position of the field of view of said first image in the field of view of said second image,
wherein said encoding device is also configured to receive said first (I_{HR-WxH}(t)) and second image (I_{LR-NxM}(t)) and said delimitation metadata from said composite image capture device,
wherein said encoding device is also configured to receive distorsion metadata from said composite image capture device.

13. A computer-readable program comprising computer-executable instructions to enable a computer to perform the method of any one of claims 1 to 7.
